(19) Europäisches Patentamt
European Patent Office
Office européen des brevets

(11) **EP 2 737 833 B1**

(12) **FASCICULE DE BREVET EUROPEEN**

(45) Date de publication et mention
de la délivrance du brevet:
**18.03.2015 Bulletin 2015/12**

(51) Int Cl.:
***A47J 31/36*** *(2006.01)*

(21) Numéro de dépôt: **13192933.3**

(22) Date de dépôt: **14.11.2013**

(54) **Dispositif d'infusion avec contrôle de la quantité de mouture par un débitmètre et machine à café comportant un tel dispositif**

Aufgussvorrichtung mit Kontrolle der Kaffeepulvermenge anhand eines Durchsatzmessers, und mit einer solchen Vorrichtung ausgestattete Kaffeemaschine

Brewing device with control of the amount of grinds by a flowmeter and coffee-maker comprising such a device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.12.2012 FR 1261571**

(43) Date de publication de la demande:
**04.06.2014 Bulletin 2014/23**

(73) Titulaire: **SEB S.A.**
**69130 Ecully (FR)**

(72) Inventeurs:
• **Leforgeais, Michel**
**14250 FONTENAY LE PESNEL (FR)**
• **Leterrier, Thomas**
**50000 SAINT-LÔ (FR)**
• **Hiron, Frédéric**
**72130 SAINT OUEN DE MIMBRE (FR)**
• **Deliens, Patrick**
**53100 MAYENNE (FR)**
• **Le Goueff, Ronan**
**53000 LAVAL (FR)**

(74) Mandataire: **Bourrières, Patrice**
**SEB Développement**
**Service Propriété Industrielle**
**Les 4 M - Chemin du Petit Bois**
**B.P. 172**
**69134 Ecully Cedex (FR)**

(56) Documents cités:
**EP-A1- 0 521 561      EP-A1- 2 394 541**
**US-A1- 2005 193 891**

**Description**

La présente invention se rapporte à un dispositif d'infusion pour machine à café du type espresso, en particulier un dispositif d'infusion dans lequel une quantité de mouture introduite dans une chambre d'infusion est contrôlée à chaque cycle pour garantir un résultat répétitif pour un type de boissons sélectionné.

La quantité de mouture à introduire dans la chambre d'infusion peut être variable pour permettre d'obtenir des boissons différentes notamment café serré appelé ristretto, café espresso, café long ...

Habituellement, le dispositif d'infusion d'une machine à café comporte une chambre d'infusion alimentée en mouture et un piston presseur comprimant la mouture dans la chambre d'infusion en une galette. Généralement, la mouture est produite par un broyeur de café muni de meules dont une est entrainée en rotation. La quantité de mouture délivrée correspond à un temps d'entrainement de la meule mémorisé dans un circuit de commande. Cependant, plusieurs paramètres peuvent faire varier la quantité de mouture délivrée pour un même temps d'entrainement de la meule, notamment l'usure des meules ou la dureté des grains de café.

Pour mesurer cette dérive, il est connu d'ajouter un dispositif de mesure de l'épaisseur de la galette de mouture comprimée représentative de la quantité de mouture introduite dans la chambre d'infusion. L'épaisseur de la galette de mouture est calculée à partir de la mesure de la position de tassage du piston presseur dans la chambre d'infusion.

Ainsi, on connaît du document EP0627186 un appareil pour préparer des boissons comportant un dispositif d'infusion comprenant une chambre d'infusion recevant la mouture et un piston presseur qui est déplacé axialement par un moteur électrique d'une position d'attente à l'extérieur de la chambre vers une position de tassage à l'intérieur de la chambre. Un capteur associé à un dispositif de contrôle permet de calculer la position de tassage du piston dans la chambre en comptant le nombre de tours réalisé par le moteur. Le capteur peut être un capteur à effet Hall associé à plusieurs aimants entrainés en rotation ou un capteur optique associé à un disque à fentes entrainé en rotation par le moteur. La position de tassage du piston peut alors être comparée à une valeur prédéterminée, un écart entre ces deux valeurs pouvant indiquer une quantité trop faible ou trop importante de mouture présente dans la chambre.

Cependant, dans cette construction, les capteurs et les éléments mobiles associés sont chers et sophistiqués et peuvent être à l'origine de pannes. Notamment, un capteur optique est sensible aux salissures dans l'ambiance d'une machine à café espresso.

On connaît également du document EP2394541 un dispositif d'infusion pour machine à café du type espresso comportant une chambre d'infusion destinée à recevoir de la mouture, un piston presseur monté mobile en translation sur une course s'étendant entre une position haute de retrait pour laquelle il est situé au dessus de la chambre d'infusion et une position basse de tassage pour laquelle il pénètre dans la chambre d'infusion pour former une galette de mouture compactée, le piston presseur étant entrainé par un mécanisme d'entrainement hydraulique comportant un vérin hydraulique et une pompe. Le dispositif comporte un potentiomètre rotatif commandé par des moyens d'entrainement lors de la course du piston presseur pour permettre de mesurer la position de tassage du piston presseur et d'en déduire la hauteur d'une galette compactée de mouture.

Ce document divulgue un dispositif économique pour l'entrainement du piston presseur dans la mesure où la pompe d'alimentation du vérin hydraulique est nécessaire pour l'injection de l'eau chaude sous pression dans la chambre d'infusion pour réaliser un café. Cependant, pour la mesure de la hauteur de la galette compactée de mouture, le potentiomètre est un composant cher et volumineux, difficile à agencer dans le dispositif d'infusion.

Le but de la présente invention est de remédier aux inconvénients précités et de proposer un dispositif d'infusion permettant de contrôler la quantité de mouture introduite dans une chambre d'infusion de manière précise qui soit de conception simple et économique à mettre en oeuvre.

Un autre but de la présente invention est de proposer, un dispositif d'infusion qui fonctionne de manière fiable.

Un autre but de l'invention est de proposer une machine à café du type espresso comportant un dispositif d'infusion du type précité.

Ces buts sont atteints avec un dispositif d'infusion pour machine à café du type espresso comportant une chambre d'infusion destinée à recevoir de la mouture, un piston presseur monté mobile sur une course s'étendant entre une position haute et une position basse de tassage pour laquelle il pénètre dans ladite chambre d'infusion pour former une galette de mouture compactée, un mécanisme d'entrainement hydraulique du piston presseur comportant une pompe hydraulique et des moyens de mesure du volume de fluide hydraulique injecté dans le mécanisme d'entrainement caractérisé en ce que le dispositif d'infusion comporte un circuit de commande déterminant la hauteur de la galette de mouture compactée à partir des signaux délivrés par les moyens de mesure du volume lors de la course du piston presseur.

Le nombre de signaux émis par les moyens de mesure du volume sont proportionnels à la quantité de fluide hydraulique, par exemple de l'eau, injecté par la pompe dans le mécanisme d'entrainement du piston presseur, par exemple un vérin, pour le déplacer de la position haute à la position basse de tassage. La quantité d'eau injectée dans le vérin est proportionnelle à la course du piston presseur. Le circuit de commande peut donc à partir du nombre de signaux émis par les moyens de mesure du volume déterminer la course du piston presseur et en déduire la hauteur de la galette compactée de mouture. Avantageusement, la pompe hydraulique alimente la chambre d'infusion en eau et le circuit de commande détermine la quantité d'eau injectée, représentative du volume de la boisson à réaliser, à partir des signaux délivrés par les moyens de mesure du volume.

Cette disposition permet de réaliser avec la pompe hydraulique et les moyens de mesure du volume deux fonctions différentes : une première fonction qui consiste à réaliser une boisson en injectant et en dosant l'eau chaude et une deuxième fonction qui consiste à compacter une galette de mouture et à la mesurer. Ainsi, on obtient donc un dispositif d'infusion particulièrement économique.

De préférence, les moyens de mesure du volume comportent un débitmètre.

Le débitmètre est une solution particulièrement économique pour mesurer un volume de fluide injecté par la pompe hydraulique.

Avantageusement, le dispositif d'infusion comporte un dispositif d'étalonnage du débitmètre par rapport à une partie de la course du piston presseur.

Sur une partie de la course du piston presseur, on compte le nombre de signaux émis par le débitmètre. On peut donc étalonner le débitmètre en déterminant la course élémentaire parcourue en millimètre par le piston presseur pour chaque signal émis par le débitmètre.

Cette disposition permet donc de pouvoir choisir un débitmètre standard du commerce, sans plage de précision particulière. Ainsi, ce composant est très économique.

Avantageusement, le dispositif d'étalonnage comporte un interrupteur et une règle mobile avec le piston presseur, la règle étant munie de deux bossages coopérant avec l'interrupteur, la distance entre les deux bossages correspondant à la partie de la course du piston presseur.

Cette disposition permet au circuit de commande de déterminer deux points particuliers du déplacement du piston presseur à l'aide de deux signaux électriques générés par l'interrupteur lors du passage des bossages. Ces deux points caractérisent une partie connue de la course du piston presseur égale à la distance entre les deux bossages.

Ainsi, on réalise un dispositif d'étalonnage du débitmètre à partir de composants simples et économiques.

Avantageusement, la partie de la course mesurée est supérieure à un tiers de la course du piston presseur.

De préférence, la partie de la course mesurée est supérieure à la moitié de la course du piston presseur.

Ces dispositions permettent d'obtenir une bonne précision de l'étalonnage du débitmètre.

Avantageusement, l'interrupteur est étanche.

Cette disposition permet d'obtenir un fonctionnement de l'interrupteur fiable dans le temps, malgré un environnement humide et pollué par les résidus de mouture.

Avantageusement, le mécanisme d'entrainement hydraulique du piston presseur comporte un vérin hydraulique.

Cette disposition permet de réaliser un mécanisme d'entrainement hydraulique à partir d'un composant simple et économique.

L'invention concerne également une machine à café du type espresso comportant un dispositif d'infusion telle que précédemment décrite.

L'invention sera mieux comprise à l'étude du mode de réalisation pris à titre nullement limitatif et illustré dans les figures annexées dans lesquelles :

- La figure 1 illustre une vue en perspective d'une machine à café espresso incorporant un dispositif d'infusion selon un mode particulier de réalisation de l'invention ;
- La figure 2 illustre une vue en perspective du dispositif d'infusion de la figure 1 dont le piston presseur est illustré en position de retrait, la pompe hydraulique, le débitmètre et le circuit de commande étant représentés de façon schématique ;
- La figure 3 illustre une vue schématique du dispositif d'infusion illustré sur la figure 2 ;
- La figure 4 illustre une vue schématique du dispositif d'infusion illustré sur la figure 2, dont le premier bossage de la réglette actionne l'interrupteur ;
- La figure 5 illustre une vue schématique du dispositif d'infusion illustré sur la figure 2, dont le deuxième bossage de la réglette actionne l'interrupteur;
- La figure 6 illustre une vue schématique du dispositif d'infusion illustré sur la figure 2, dont le piston presseur est illustré en position de tassage.

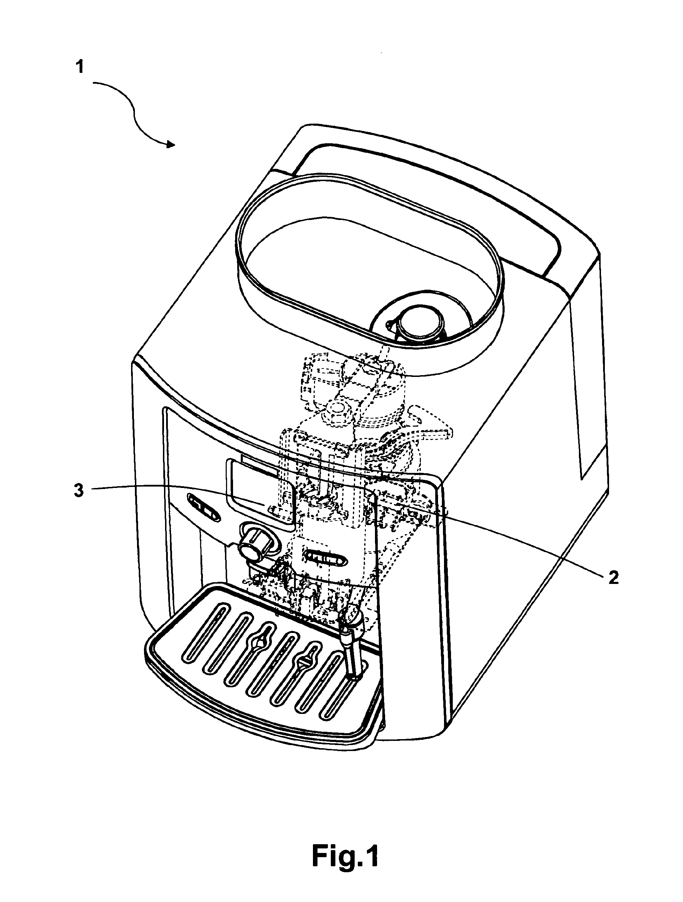

Dans l'exemple de réalisation illustré à la figure 1, un dispositif d'infusion 2 équipe une machine à café 1 du type automatique comprenant une alimentation en eau froide, un distributeur de café en poudre provenant d'un broyeur à café intégré au distributeur (non représentés sur les figures) et un circuit de commande 3 pour la commande et la gestion des cycles de préparation des boissons infusées, le circuit de commande 3 pilotant notamment le dispositif d'infusion 2.

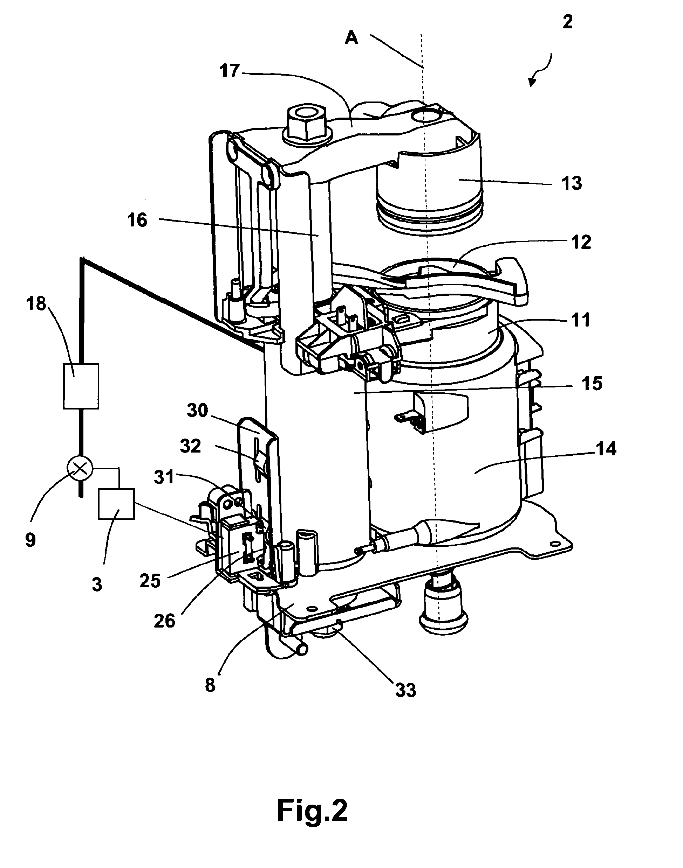

Un tel dispositif d'infusion 2, illustré aux figures 2 à 6 comprend notamment un corps 11 à axe longitudinal vertical renfermant une chambre d'infusion 12 qui est susceptible de recevoir un piston presseur 13 monté déplaçable selon l'axe A au moyen d'un mécanisme d'entraînement hydraulique, une pompe hydraulique 18, destinée à créer une circulation d'eau et d'infusion, ainsi qu'une chaudière 14 destinée à chauffer l'eau pour la préparation de l'infusion dans la chambre d'infusion 12. Selon une caractéristique particulière de l'invention, mais non limitative, le mécanisme d'entraînement hydraulique comporte un vérin hydraulique 15 à simple effet comportant une tige supérieure 16 portant un bras 17 formant potence et dont l'extrémité libre est reliée au piston presseur 13. Le vérin hydraulique 15 est agencé latéralement au corps 11 sur un support 8, ainsi les courses du piston presseur 13 et du vérin hydraulique 15 sont effectuées selon des directions pratiquement parallèles. Le piston presseur 13 parcourt une course entre une position haute de retrait pour laquelle il est situé au dessus de la chambre d'infusion 12 et une position basse de tassage pour laquelle il pénètre dans la chambre d'infusion 12. Dans la position basse de tassage, le piston presseur 13 comprime la mouture admise dans la chambre d'infusion 12 pour former une galette de mouture comprimée.

La chaudière 14 et le corps 11 sont formés en une seule pièce de matériau conducteur de la chaleur qui contient une résistance électrique chauffante, des canaux de passage et de chauffage de l'eau dont des entrées sont reliées, via la pompe hydraulique 18, à un réservoir d'eau froide et dont des extrémités débouchent sur le fond de la chambre d'infusion 12. Le piston presseur 13 présente un conduit de passage de l'infusion débouchant par un orifice de sortie, tandis que la pompe hydraulique 18 est adaptée à créer une circulation d'eau ascendante dans la chambre d'infusion 12 vers le conduit lorsque le piston presseur 13 ferme la chambre. Un débitmètre 9 est agencé dans le circuit hydraulique pour mesurer la quantité d'eau injectée dans la chambre d'infusion 12 et ainsi fournir le volume de la boisson définie. Le débitmètre 9 génère des signaux vers le circuit de commande 3. Un tel dispositif d'infusion 2 a par exemple été décrit plus en détail dans la demande de brevet WO99/12456.

Avantageusement, les signaux délivrés par le débitmètre 9 permettent au circuit de commande 3 de déterminer la hauteur de la galette compactée de mouture lors du déplacement du piston presseur. Le débitmètre 9 génère un signal carré formé par un front montant et un front descendant, caractérisant le passage d'un volume élémentaire de fluide hydraulique, dans notre cas de l'eau. Un signal carré sera appelé « pulse ». L'injection d'un volume d'eau élémentaire dans une chambre 20 du vérin hydraulique 15 provoque le déplacement vers le bas de la tige supérieure 16 et du piston presseur 13 d'une distance élémentaire définissant la sensibilité du débitmètre en millimètre par pulse. Le débitmètre peut être du type avec capteur à effet Hall et roue à palettes mobile munie d'aimants.

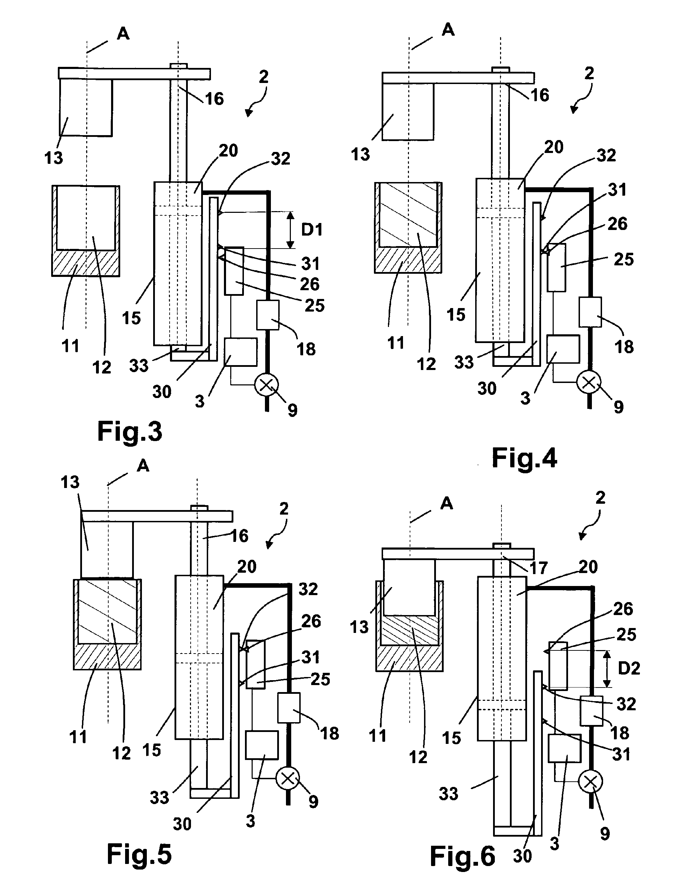

De manière avantageuse, le dispositif d'infusion comporte un dispositif d'étalonnage du débitmètre 9 qui permet au circuit de commande 3 de recalculer à chaque cycle la sensibilité du débitmètre. Le dispositif d'étalonnage comprend un interrupteur 25 et une règle 30 solidaire du piston presseur 13. L'interrupteur 25 est par exemple du type « micro switch » choisi en version étanche et comprenant un bouton poussoir 26. L'interrupteur 25 est agencé sur le support 8. Dans le mode de réalisation illustré par les figures 2 à 6, la règle est agencée parallèlement à la direction de la course du piston presseur 13. La règle 30 est solidaire d'une tige inférieure 33 du vérin hydraulique 15. La règle 30 comporte un premier bossage 31 et un deuxième bossage 32 disposés selon la direction de la course du piston presseur 13 et séparés d'une distance D1 (Fig.3). Le premier bossage 31 et le deuxième bossage 32 coopèrent avec le bouton poussoir 26 de l'interrupteur 25 lors de la course du piston presseur 13. L'appui d'un bossage 31, 32 sur le bouton poussoir 26 génère de la part de l'interrupteur 25 un signal électrique enregistré par le circuit de commande 3.

La chambre d'infusion 12 peut comporter une butée sur laquelle le piston presseur vient en appui pour ne pas aller au-delà de l'épaisseur mini.

En fonctionnement, à la première utilisation, l'utilisateur sélectionne et lance la préparation d'une boisson à l'aide du circuit de commande 3. Un temps de broyage pour produire une galette de mouture comprimée d'une hauteur théorique pour la boisson sélectionnée est en mémoire. Le circuit de commande 3 va commander le broyeur pour alimenter la chambre d'infusion 12 avec la quantité de mouture prédéfinie. Dés que le temps de broyage est écoulé, la pompe hydraulique 18 alimente le vérin hydraulique 15 qui entraine le piston presseur 13 et la règle 30 de la position haute illustrée aux figures 2 et 3 vers la position basse illustrée à la figure 6.

De manière préférentielle mais non limitative, le circuit de commande 3 va déterminer la hauteur de la galette de mouture en effectuant les étapes suivantes :

La première étape consiste à étalonner le débitmètre 9 en calculant sa sensibilité S1 : Le premier bossage 31 repousse le bouton poussoir 26 (Fig.4) qui génère un signal électrique enregistré par le circuit de commande 3 qui démarre le comptage des signaux carrés émis par le débitmètre 9. Le piston presseur 13 et la règle 30 continuent de se déplacer, le premier bossage 31 libère le bouton poussoir 26 puis le deuxième bossage 32 repousse le bouton poussoir 26 (Fig.5) qui génère un signal électrique enregistré par le circuit de commande 3 qui mémorise alors la somme P1 des signaux carrés émis par le débitmètre 9 sur la course égale à la distance entre les bossages 31, 32. Le circuit de commande 3 calcule alors la sensibilité S1 de débitmètre qui est égale à la distance D1 entre les bossages 31, 32 divisé par P1: $S1 = D1/P1$.

La deuxième étape consiste à déterminer une distance D2 (Fig.6) parcourue par le piston presseur entre le signal émis par l'interrupteur 25 lors de l'appui du deuxième bossage 32 et la position basse de tassage : le circuit de commande 3 démarre à partir du signal émis par l'interrupteur 25 lors de l'appui du deuxième bossage 32 sur le bouton poussoir 26 un comptage des signaux carrés émis par le débitmètre 9 jusqu'à l'arrêt du piston presseur 13 en position basse de tassage (Fig. 6). Lorsque la position de tassage est atteinte, la pompe hydraulique ne peut plus injecter d'eau dans la chambre du vérin 15, le débit est nul et le débitmètre ne génère plus de signaux. La somme P2 des signaux carrés émis par le débitmètre 9 permet au circuit de commande 3 de déterminer une distance D2 parcourue par le piston presseur entre le signal émis par l'interrupteur 25 lors de l'appui du deuxième bossage 32 et la position basse de tassage : D2 = P2 x S1.

La troisième étape consiste à déterminer la hauteur Hr de la galette compactée de mouture : dans le circuit de commande est mémorisée une distance DR correspondant au déplacement du piston presseur 13 depuis le signal émis par l'interrupteur 25 lors de l'appui du premier bossage 31 sur le bouton poussoir 26 jusqu'à une position de butée au fond de la chambre d'infusion 12, cette position étant atteinte en l'absence de mouture. Le circuit de commande 3 calcule à partir de cette distance DR la hauteur Hr de la galette compactée de mouture :

$$Hr = DR - D2 - D1.$$

Le circuit de commande 3 mémorise la hauteur Hr de la galette compactée de mouture.

Une fois les opérations de réalisation et de distribution de la boisson terminées, le circuit de commande 3 commande le vérin hydraulique 15 pour un retour de la position basse de tassage en position haute.

A titre d'exemple, la distance DR est égale à 55 millimètres. La distance D1 entre le premier bossage 31 et le deuxième bossage 32 est de 30 millimètres. Le débitmètre génère, par exemple, sur la distance D1 la somme P1 de 100 signaux carrés ou pulses. La sensibilité S1 = D1/P1 du débitmètre est de 0,3 millimètre par pulse.

En considérant, par exemple, que le circuit de commande 3 compte une somme P2 des signaux carrés émis par le débitmètre égale à 40 pulses, la distance D2 calculée sera égale : D2 = P2 x S1 = 40 x 0,3 = 12 millimètres.

Le circuit de commande peut alors en déduire la hauteur Hr de la galette compactée de mouture = DR - D2 - D1 = 55 - 30 - 12 = 13 millimètres.

La mémorisation de la hauteur Hr de la galette compactée de mouture va permettre au circuit de commande 3 de calculer pour le cycle suivant de préparation de la même boisson un temps de broyage corrigé d'un coefficient K issu par exemple du ratio de la hauteur théorique de la galette compactée de mouture et de la hauteur Hr. Le temps de broyage corrigé peut être issu d'un calcul plus sophistiqué prenant en compte plusieurs hauteurs Hr réelles de cycles précédents.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, l'interrupteur 25 est monté mobile sur la tige 33 du vérin hydraulique 15 et la règle 30 est fixé sur le support 8.

## Revendications

1. Dispositif d'infusion (2) pour machine à café du type espresso comportant une chambre d'infusion (12) destinée à recevoir de la mouture, un piston presseur (13) monté mobile sur une course s'étendant entre une position haute et une position basse de tassage pour laquelle il pénètre dans ladite chambre d'infusion (12) pour former une galette de mouture compactée, un mécanisme d'entrainement hydraulique du piston presseur (13) comportant une pompe hydraulique (18) et des moyens de mesure du volume (9) de fluide hydraulique injecté dans le mécanisme d'entrainement **caractérisé en ce que** le dispositif d'infusion (2) comporte un circuit de commande (3) déterminant la hauteur de la galette de mouture compactée à partir des signaux délivrés par les moyens de mesure du volume (9) lors de la course du piston presseur (13).

2. Dispositif d'infusion (2) selon la revendication 1, **caractérisé en ce que** la pompe hydraulique (18) alimente la chambre d'infusion (12) en eau et le circuit de commande (3) détermine la quantité d'eau injectée, représentative du volume de la boisson à réaliser à partir des signaux délivrés par les moyens de mesure du volume (9).

3. Dispositif d'infusion (2) selon les revendications 1 ou 2, **caractérisé en ce que** les moyens de mesure du volume comportent un débitmètre (9).

4. Dispositif d'infusion (2) selon la revendication 3, **caractérisé en ce qu'**il comporte un dispositif d'étalonnage (25, 30) du débitmètre par rapport à une partie de la course du piston presseur (13).

5. Dispositif d'infusion (2) selon la revendication 4, **caractérisé en ce que** le dispositif d'étalonnage comporte un interrupteur (25) et une règle (30) mobile avec le piston presseur (13), la règle (30) étant munie de deux bossages (31, 32) coopérant avec l'interrupteur (25), la distance entre les deux bossages (31, 32) correspondant à la partie de la course du piston presseur (13).

6. Dispositif d'infusion (2) selon l'une quelconque des revendications 4 à 5, **caractérisé en ce que** la partie de la course mesurée est supérieure à un tiers de la course du piston presseur (13).

7. Dispositif d'infusion (2) selon l'une quelconque des revendications 4 à 5, **caractérisé en ce que** la partie de la course mesurée est supérieure à la moitié de la course du piston presseur (13).

8. Dispositif d'infusion (2) selon l'une des revendications 5 à 6, **caractérisé en ce que** l'interrupteur (25) est étanche.

9. Dispositif d'infusion (2) selon l'une quelconque des revendications 1 à 8, **caractérisé en ce que** le mécanisme d'entrainement hydraulique du piston presseur (13) comporte un vérin hydraulique (15)

10. Machine à café du type espresso (1) comportant un dispositif d'infusion (2) conforme à l'une des revendications 1 à 9.

## Patentansprüche

1. Brühvorrichtung (2) für Espresso-Kaffeemaschinen mit einer Brühkammer (12) zur Aufnahme des Aufgusses, einem Presskolben (13), der mobil in einem Hubbereich, welcher sich zwischen einer oberen Position und einer unteren Verdichtungsposition erstreckt, gelagert ist, wobei er, um letztere zu erreichen, durch die Brühkammer (12) geführt wird, um eine komprimierte Aufgussmasse zu formen, und mit einem hydraulischen Antriebsmechanismus des Presskolbens (13), der eine Hydraulikpumpe (18) und Vorrichtungen zur Volumenmessung (9) der in den Antriebsmechanismus eingespritzten Hydraulikflüssigkeit umfasst, **dadurch gekennzeichnet, dass** die Brühvorrichtung (2) mit einem Steuerkreis (3) ausgestattet ist, über den mithilfe von Signalen, die bei Bewegung des Presskolbens (13) über die Vorrichtungen zur Volumenmessung (9) ausgegeben werden, die Höhe der komprimierten Aufgussmasse bestimmt wird.

2. Brühvorrichtung (2) nach Anspruch 1, **dadurch gekennzeichnet, dass** die Brühkammer (12) über die Hydraulikpumpe (18) mit Wasser gespeist und die Menge des eingespritzten Wassers mithilfe von Signalen, die über die Vorrichtungen zur Volumenmessung (9) ausgegeben werden, über den Steuerkreis (3) bestimmt wird, wobei diese Menge das zu erzeugende Getränkevolumen darstellt.

3. Brühvorrichtung (2) nach Anspruch 1 oder 2, **dadurch gekennzeichnet, dass** die Vorrichtungen zur Volumenmessung einen Durchflussmesser (9) umfassen.

4. Brühvorrichtung (2) nach Anspruch 3, **dadurch gekennzeichnet, dass** sie eine Kalibrierungsvorrichtung (25, 30) für den Durchflussmesser hinsichtlich eines Teils des Hubbereichs des Presskolbens (13) umfasst.

5. Brühvorrichtung (2) nach Anspruch 4, **dadurch gekennzeichnet, dass** die Kalibrierungsvorrichtung einen Schalter (25) und eine gegenüber dem Presskolben (13) bewegliche Messleiste (30) umfasst, wobei diese Messleiste (30) zwei Vorsprünge (31, 32) aufweist, die mit dem Schalter (25) zusammenwirken, und wobei der Abstand zwischen diesen zwei Vorsprüngen (31, 32) dem genannten Teil des Hubbereichs des Presskolbens (13) entspricht.

6. Brühvorrichtung (2) nach einem der Ansprüche 4 bis 5, **dadurch gekennzeichnet, dass** der gemessene Teil des Hubbereichs größer ist als ein Drittel des gesamten Hubbereichs des Presskolbens (13).

7. Brühvorrichtung (2) nach einem der Ansprüche 4 bis 5, **dadurch gekennzeichnet, dass** der gemessene Teil des Hubbereichs größer ist die Hälfte des gesamten Hubbereichs des Presskolbens (13).

8. Brühvorrichtung (2) nach einem der Ansprüche 5 bis 6, **dadurch gekennzeichnet, dass** der Schalter (25) abgedichtet ist.

9. Brühvorrichtung (2) nach einem der Ansprüche 1 bis 8, **dadurch gekennzeichnet, dass** der hydraulische Antriebsmechanismus des Presskolbens (13) einen Hydraulikzylinder (15) umfasst.

10. Espresso-Kaffeemaschine (1) mit Brühvorrichtung (2) nach einem der Ansprüche 1 bis 9.

## Claims

1. Brewing device (2) for espresso type coffee machine comprising a brewing chamber (12) for receiving the coffee grounds, a presser piston (13) mounted movable along a stroke extending between an upper position and a lower tamping position for which it penetrates into said brewing chamber (12) to form a compacted cake of coffee grounds, a hydraulic mechanism for driving the presser piston (13) having a hydraulic pump (18) and means for measuring the volume (9) of hydraulic fluid injected into the drive mechanism, **characterised in that** the brewing device (2) comprises a control circuit (3) determining the height of the compacted cake of coffee grounds using the signals delivered by the means for measuring the volume (9) during the stroke of the presser piston (13).

2. Brewing device (2) according to claim 1, **characterised in that** the hydraulic pump (18) supplies the brewing chamber (12) with water and the control circuit (3) determines the quantity of water injected, representative of the volume of the beverage to be produced using the signals delivered by the means for measuring the volume (9).

3. Brewing device (2) according to claim 1 or 2, **characterised in that** the means for measuring the volume comprise a flowmeter (9).

4. Brewing device (2) according to claim 3, **characterised in that** it comprises a device (25, 30) for calibrating the flowmeter relative to part of the stroke of the presser piston (13).

5. Brewing device (2) according to claim 4, **characterised in that** the calibration device comprises a switch (25) and a rule (30) movable with the presser piston (13), the rule (30) being provided with two bosses (31, 32) cooperating with the switch (25), the distance between the two bosses (31, 32) corresponding to the part of the stroke of the presser piston (13).

6. Brewing device (2) according to claim 4 or 5, **characterised in that** the part of the stroke measured is greater than one third of the stroke of the presser piston (13).

7. Brewing device (2) according to claim 4 or 5, **characterised in that** the part of the stroke measured is greater than one half of the stroke of the presser piston (13).

8. Brewing device (2) according to claim 5 or 6, **characterised in that** the switch (25) is waterproof.

9. Brewing device (2) according to any of claims 1 to 8, **characterised in that** the hydraulic mechanism for driving the presser piston (13) comprises a hydraulic cylinder (15).

10. Espresso type coffee machine (1) comprising a brewing device (2) according to one of claims 1 to 9.

**Fig.1**

**Fig.2**

Fig.3

Fig.4

Fig.5

Fig.6

## RÉFÉRENCES CITÉES DANS LA DESCRIPTION

**Documents brevets cités dans la description**

- EP 0627186 A
- EP 2394541 A

- WO 9912456 A